# EUROPEAN PATENT SPECIFICATION

(11) **EP 1 868 099 B1**
(45) Date of publication and mention of the grant of the patent: **19.10.2016**
(21) Application number: 06115359.9
(22) Date of filing: 13.06.2006
(51) Int. Cl.: G06F 11/36

(54) **Bug management tool**
Softwarefehler-Verwaltungswerkzeug
Outil de gestion de bugs logiciels

(43) Date of publication of application: 19.12.2007
(73) Proprietor: Microsoft Technology Licensing, LLC, Redmond, WA 98052 (US)
(72) Inventor: Grimes, Robert Microsoft, EPDC, Dublin 18 (IE); Kinch, Paul Microsoft, EPDC, Dublin 18 (IE); Wilkinson, Damian, Dublin D13 (IE)
(74) Representative: Wallis, Helen Frances Mary

(56) References cited:
- US-A- 5 781 720
- US-A1- 2006 116 864
- TWIDALE M B ET AL: "Exploring Usability Discussions in Open Source Development" PROC. 38TH HAWAII INT. CONF. ON SYSTEM SCIENCES, 3 January 2005 (2005-01-03), XP010762574
- WARD A: "TESTING TIMES" APPLICATION DEVELOPMENT ADVISOR, SIGS LTD., NEWDIGATE, GB, vol. 2, no. 4, March 1999 (1999-03), pages 22-24,26,28, XP008020786 ISSN: 1369-4200

## Description

### BACKGROUND

The user interface (UI) of a software product (such as an application or an operating system) includes a large number of elements such as dialogs (e.g. pop-up windows, screens etc) each of which may contain one or more controls, such as text areas or boxes, buttons with text etc. The UI of a software product may contain very large numbers (e.g. thousands) of dialogs and an even larger number of controls. As a product is developed, the UI changes and this can introduce defects in the UI, such as overlapping boxes, truncated text on buttons etc. Such defects can be introduced in each new build of the product and testing for such products is time consuming and costly as the UI must be fully exercised continually throughout the product development life cycle.

Furthermore, software products are often provided in many different language versions and the process of converting a software product from the initial language it was written in to other languages is known as 'localisation'. Typically the localisation is done by translating all the string elements within the user interface (UI) of the product and any other language specific parts (e.g. hotkeys, coordinates, sizes) and then re-building the product to produce the language specific version. Localisation can result in similar defects being introduced to the UI.
US Patent 5,781,720 describes a method for automated testing of both new and revised computer application programs which use a Graphical User Interface (GUI). Difference analysis is described in which the user is allowed to specify a set of inclusion/exclusion regions which can be used to mask areas of a bitmap where differences are not considered significant.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

An automated bug management method is described in which data received which identifies one or more potential bugs in the user interface of a version of a software product is filtered. This filtering is achieved by accessing data relating to previously reviewed bugs in a user interface of another version of the software product and comparing the potential bugs with the reviewed bugs to determine whether any of the potential bugs are noise. The filtering process removes data relating to those potential bugs which are noise and then the filtered data is used to update a store of bug data.

The present example provides an automated bug management method comprising: receiving data identifying one or more potential bugs in a user interface of a second version of a software product, wherein the user interface of the second version of the software product is in a second language and the data identifying one or more potential bugs comprises a language insensitive reference for each of the one or more potential bugs; accessing data in a data store, the data relating to previously reviewed bugs in a user interface of at least a first version of the software product, wherein the user interface of the first version of the software product is in a first language; comparing the potential bugs with the reviewed bugs to determine whether any of the one or more potential bugs are noise, wherein noise comprises falsely identified bugs; filtering the received data to remove data identifying potential bugs which are noise; and updating the data in the data store based on the filtered data.

Advantageously, this provides an improved automated bug management method which enables faster and more efficient resolution of bugs within a software product. The filtering process reduces the number of bugs that need to be reviewed.

Additionally, this means that bugs which have been reviewed in a first language version and flagged as noise are not re-reviewed in any subsequent different language versions of the same product. This results in faster and more efficient localisation of software products.

Furthermore, this provides a mechanism by which corresponding bugs occurring in different language variants of the same product can be identified.

The at least a first version of the software product may comprise a version of the software product saved as a baseline.

Advantageously, this enables new versions of a software product to be compared back to a version which has already been reviewed and fully debugged. This results in faster and more efficient production of new upgrades or other new versions of a software product.

Preferably the language insensitive reference for a potential bug comprises a combination of language insensitive parameters for each control involved in the bug and an identifier for a type associated with the bug.

Preferably comparing the potential bugs with the reviewed bugs to determine whether any of the one or more potential bugs are noise comprises: comparing the received language insensitive references for the one or more potential bugs with the language insensitive references for the reviewed bugs to identify any reviewed bugs with identical language insensitive references; and for each of the identified reviewed bugs with identical language insensitive references, determining if the bug was flagged as noise.

The method may further comprise: for each of the identified previously reviewed bugs, determining if the bug was flagged as ignored and identifying a severity level associated with the flag; and filtering the received data to remove data identifying any potential bugs with identical language insensitive references to a reviewed bug which was flagged as ignored with a higher severity level than the potential bug.

Advantageously, this enables minor defects to be marked as ignored in a first version of a software product and then in subsequent versions, as long as the defect does not get any more severe, the bug is filtered out and need not be re-reviewed. This improves the efficiency and speed of the debugging process.

The method may further comprise: selecting a bug from the updated data in the data store; and displaying data relating to the selected bug.

Preferably the data relating to the selected bug includes: an image captured from the second version of the software product showing the selected bug.

Advantageously, this provides the reviewer with a quick visual indication of the nature of the bug.

The method may further comprise: displaying a corresponding image captured from the first version of the software product.

Advantageously, this provides the reviewer with a visual comparison of what the UI should look like without the bug.

The method may further comprise: receiving an input relating to the selected bug; and changing a flag associated with the bug based on the input.

Preferably the flag is changed to one of noise, ignored or fixed.

The method may further comprise: receiving an input relating to the selected bug; and closing the bug based on the input.

Updating the data in the data store based on the filtered data may comprise: for each potential bug identified in the filtered data, determining whether data relating to a corresponding reviewed bug exists in the data store; where there is no data relating to a corresponding reviewed bug, creating a new entry in the data store; and where there is data relating to a corresponding reviewed bug, updating said data.

Updating the data in the data store based on the filtered data may further comprise: identifying each of the reviewed bugs in the user interface of at least a first version of the software product where the relating data has not been updated; and closing each said identified reviewed bug.

Advantageously this provides an automatic closure of bugs which have been fixed between one version and the next version of the software product. This improves the efficiency of the debugging process.

Receiving data identifying one or more potential bugs in a user interface of a second version of a software product may comprise: launching the second version of the software product, wherein the user interface of the second version of the software product comprises a plurality of dialogs; capturing data relating to each of the plurality of dialogs; and analysing the captured data according to specified criteria to identify one or more potential bugs.

A second example provides a computer program comprising computer program code means adapted to perform all the steps of any of the methods described above when said program is run on a computer.

The computer program may be embodied on a computer readable medium.

A third example provides a bug management tool comprising: a processor; a memory arranged to store executable instructions arranged to cause the processor to: receive data identifying one or more potential bugs in a user interface of a second version of a software product, wherein the user interface of the second version of the software product is in a second language and the data identifying one or more potential bugs comprises a language insensitive reference for each of the one or more potential bugs; access data in a data store, the data relating to previously reviewed bugs in a user interface of at least a first version of the software product, wherein the user interface of the first version of the software product is in a first language; compare the potential bugs with the reviewed bugs to determine whether any of the one or more potential bugs are noise, wherein noise comprises falsely identified bugs; filter the received data to remove data identifying potential bugs which are noise; and update the data in the data store based on the filtered data.

The tool may further comprise: a display; a user input device; the data store; and the memory may be further arranged to cause the processor to: select a bug from the updated data in the data store; and display data relating to selected bug on the display.

The memory may be further arranged to cause the processor to: update the data in the data store relating to the selected bug based on an input received via the user input device.

Preferably the language insensitive reference for a potential bug comprises a combination of language insensitive parameters for each control involved in the bug and an identifier for a type associated with the bug.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 shows an example flow diagram for a method of managing bugs in a software product;
FIG. 2 shows a schematic diagram of a bug management tool;
FIG. 3 shows an example flow diagram for a method of filtering bug data;
FIG. 4 shows a second example flow diagram for a method of filtering bug data;
FIG. 5 shows an example flow diagram for a method of operation of the bug management client;
FIG. 6 shows an example of a UI generated by the bug management client;
FIG. 7 shows an example method of obtaining capture data; and
FIG. 8 shows an example method of automatically identifying bugs.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

As described above, checking each new build of a software product for errors (referred to as 'bugs') in the UI is time consuming and costly. One method of reducing the effort required is to automate to process of identification of the bugs, for example, by comparing captured data about elements (such as dialogs, menus, toolbars, tooltips, error messages etc) within the UI against specified criteria, and this is described in more detail below. However, such an automated process often results in a large number of false positives, where bugs are identified that are subsequently discovered not to relate to an actual defect in the UI. These falsely identified bugs are referred to herein as 'noise'. An example of such noise would be a bug which identified that two controls overlap where those controls were intended to be overlapping. It is therefore beneficial to also have a bug management tool which can filter out identified bugs which are considered to be noise, particularly where a software product goes through many product builds, different versions, and different languages because potentially these noise bugs will be identified each time. The use of such a bug management tool results in quicker and more efficient resolution of bugs within a software product.

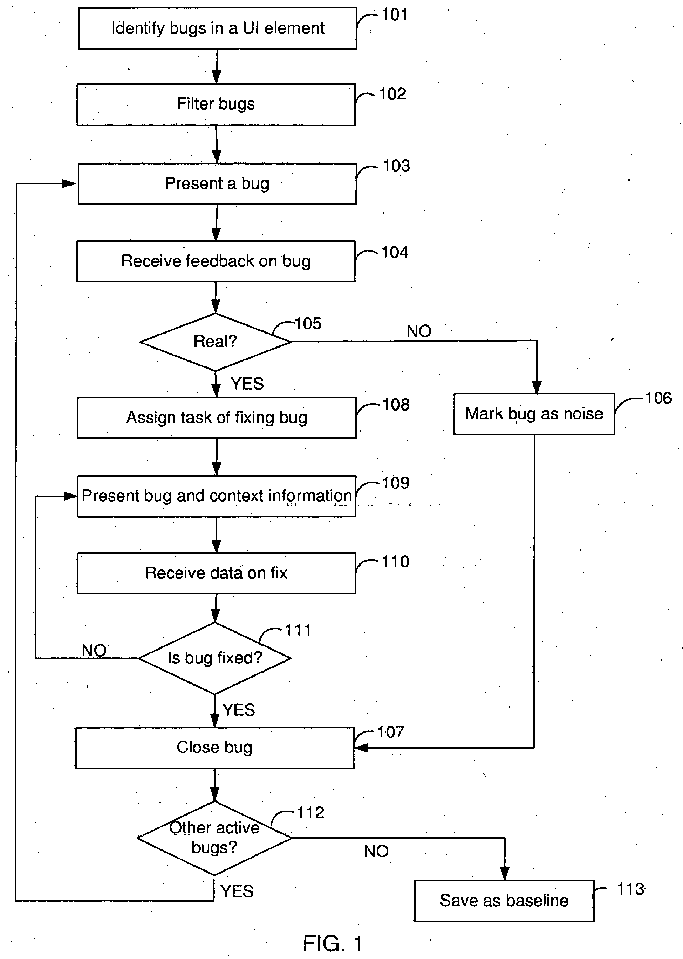

FIG. 1 shows an example flow diagram for a method of managing bugs in a software product. All bugs start as 'active' and end as 'closed' and the life cycle of a bug is that once a bug is identified and marked as 'active', it assigned to be reviewed / fixed. A bug is resolved (e.g. as noise / ignored / fixed etc) and then closed. Checks may occur prior to closing the bug to confirm that the resolution of the bug is correct. If a bug, once closed, reoccurs, the bug can be reactivated.

Bugs in a UI element (such as a dialog) are identified (step 101) and the list of identified bugs is then filtered (step 102) and all the bugs that are not filtered out are marked as 'active'. Details of a bug and context information on the bug are presented (step 103), for example to a reviewer, and feedback is received on the bug (step 104) e.g. whether it is a real bug or noise. If on the basis of the feedback received, the bug is determined to be not real (step 105), the bug is marked as 'noise' (step 106) and closed (step 107). If however the bug is determined to be real (in step 105), the task of fixing the bug is assigned (step 108), for example to an engineer who should now fix the bug. In order to assist in fixing the bug, the bug and some context information about the bug are presented (step 109) to the engineer (e.g. as was presented to the reviewer in step 103) and data is then received relating to the fix (step 110 e.g. a revised version of the UI element). It is then determined (in step 111) whether the bug has been fixed, (e.g. by identifying bugs in a revised version of the UI element and filtering the identified bugs, as in steps 101-102, to see if the bug is still there). If the bug is found to have been fixed, the bug is closed (step 107), however, if the bug remains, the bug is re-presented (step 109) so that further work can occur to fix it. Once the bug has been closed (in step 107), if there are other active bugs remaining in the UI element (determined in step 112), the process (steps 103-112) is repeated until all the bugs in the UI element have been closed. At this point, the UI element may be saved as a baseline (step 113). This baseline may be subsequently be used for comparison with later versions / builds of the UI element as is described in more detail below.

When a new version / build of the whole product or the particular UI element is available, the method can be repeated. The bugs in the new version / build of the UI element are identified (in step 101) and then these bugs are filtered using the information gained from the previous version / build. Where a bug is identified in the new build that is the same as a bug which was identified in the earlier build, marked as noise (in step 106) and closed, the bug in the new build can be filtered out and closed. This means that when reviewing a new version / build of a UI element the number of bugs which need to be presented (in step 103) is significantly reduced. By enabling this process to compare bugs identified in a new language version to bugs previously identified and resolved in a different language, this can significantly reduce the time taken to identify and resolve bugs during localisation. This provides a more efficient bug management method.

In the description above, a bug is either marked as noise and then closed or fixed and then closed. However, bugs may be resolved in other ways. For example, a bug may exist (e.g. two overlapping boxes or truncated text) but not be considered to be of high importance. In such a situation, the bug may be marked as 'Ignored' before being closed. Such ignored bugs may be given a severity rating which may subsequently be used in the filtering operation (step 102) for later versions / builds to determine whether an identified bug can also be ignored and can therefore be filtered out at this stage. The filtering process is described in more detail below.

Although FIG. 1 is described above as operating on a UI element by UI element basis, it could alternatively work over a larger part or the whole of the software product such that the baseline was not established (in step 113) until all the bugs in the whole / part of the product have been closed (in step 107).

The process shown in FIG. 1 may be used in a number of different situations, such as:
- to compare bugs in subsequent versions / builds of a software product, for example during the development of a new software product. The process may be used to identify, resolve and close all the bugs so that the product can be launched. Individual UI elements may be saved as base once there are no remaining active bugs and the proportion of UI elements (e.g. or the proportion of a particular type of UI elements, such as dialogs) saved as base may be used as an indication of how ready a product is for shipping.
- to compare back to a version of a software product which has been saved as a baseline (in step 113), for example during the development of a new version of a software product which has already been launched (e.g. an improved version, a version in a new language etc). In such a situation, the first build of a new version may be compared back to a baseline, whilst subsequent builds of the new version may be compared back to the baseline or to previous builds of that version rather than to the baseline.
Where the comparison is back to a baseline version, the identified bugs (in step 101) may include all changes compared to the baseline, whether they are the result of errors or design choices. Where the bugs relate to changes rather than errors, these may be referred to as 'comparison bugs'. Such changes may include changes to the shape, size or look of dialogs or other UI elements and these may be detected by full or partial bitmap comparison, as described in more detail below. By showing all changes at a first pass, a reviewer is able to check that changes have not affected the aesthetics of the product (which was previously deemed acceptable and saved as base), which would otherwise not be identified as an error bug. As mentioned above, subsequent iterations may compare back to the first pass rather than to the baseline or may not involve identification of comparison bugs (e.g. these may have been marked as noise and are therefore filtered out, as described below).

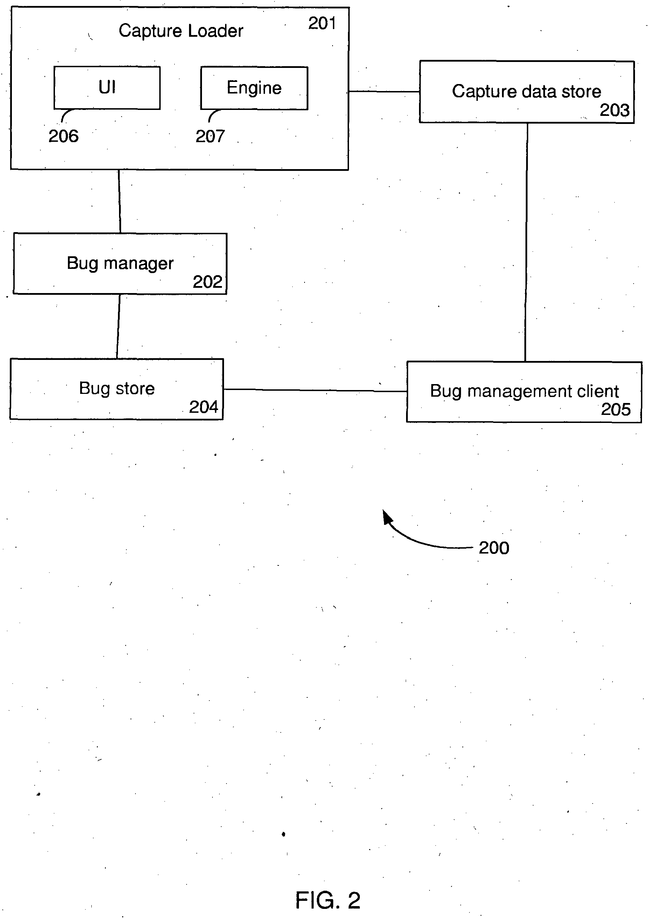

Some or all of FIG. 1 may be performed by one or more bug management tools as described in more detail below. FIG. 2 shows a schematic diagram of a bug management tool 200 comprising a capture loader 201, a bug manager 202, a capture data store 203, a bug store 204 and a bug management client 205. The capture loader 201 is arranged to receive capture data and bug data relating to a software product (or one or more dialogs within a software product) and to store the capture data in the capture data store 203. The bug manager 202 is arranged to filter the bug data (step 102) and to store the resultant bug data in the bug store 204. The bug management client 205 is arranged to present bug information, to receive inputs relating to bugs and to update bug data in the bug store 204 (steps 103-107, 109, 110, 112 and 113). As described above, the step of determining whether a bug is fixed (step 111) may comprise a repeat of the bug identification and filtering steps (steps 101 and 102).

The capture loader 201 may comprise two main elements, a capture loader UI 206 and a capture loader engine 207. The capture loader UI 206 builds context files describing the build and the language of the capture. An example of a context file is shown below:

```
 <?xml version="1.0'?>
 <Capture Version="1.0">
 <StateID>7</StateID>
 <OS OSID="1">Windows XP Professional</OS>
 <OSLanguage LangID="1033">English - en-US - 1033</OSLanguage>
 <Build>
  <BuildRevision>5614.0a</BuildRevision>
  <BuildLanguage LangID="1033">English - en-US - 1033</BuildLanguage>
  <BuildName>English US PRO 5614.0a</BuildName>
 </Build>
 <BaseLanguage LangID="1033">English - en-US - 1033</BaseLanguage>
 <PackagePath>C:\AUTOMATION\dev\OTSI\main\src\loctest\Loctest 2\loader\Lo
 ctestCaptureLoader\Sample\DupLocCRC\7.RICH</PackagePath>
 </Capture>
```

The context information may be obtained through a menu screen (e.g. with pull down boxes) which enables a user to input the required information such as software product name, language, build details and the location of capture and bug data.

Having received the required information, the UI 206 configures and launches the capture loader engine 207. The engine 207 may perform checks prior to loading the capture and bug data, such as:
- Confirmation of location in which capture data is to be stored within the capture data store 203
- Confirmation of location in which bug data is to be stored within the bug store 204
- Determination of whether baseline data already exists for the software product (or for one or more UI elements)
- Verification that there are not pending bugs for the base language state. This check may be implemented when the bug management method is being used in localisation, to avoid bugs being reported on a localised capture before the noise processing on the original source language (e.g. English) version has been completed.
- Verification that all bugs in the capture have unique LocCRC and CRC. The LocCRC is a language insensitive parameter (also referred to as a LocHash), whilst the CRC is a language specific parameter (also referred to as a Hash). These parameters are used for filtering and searching bugs and are described in more detail below.
If any of the checks fail, an error message may result. Having performed any checks, the engine 207 loads the capture data and the bug data, stores the capture data in the capture data store 203 and outputs the bug data to the bug manager 202.

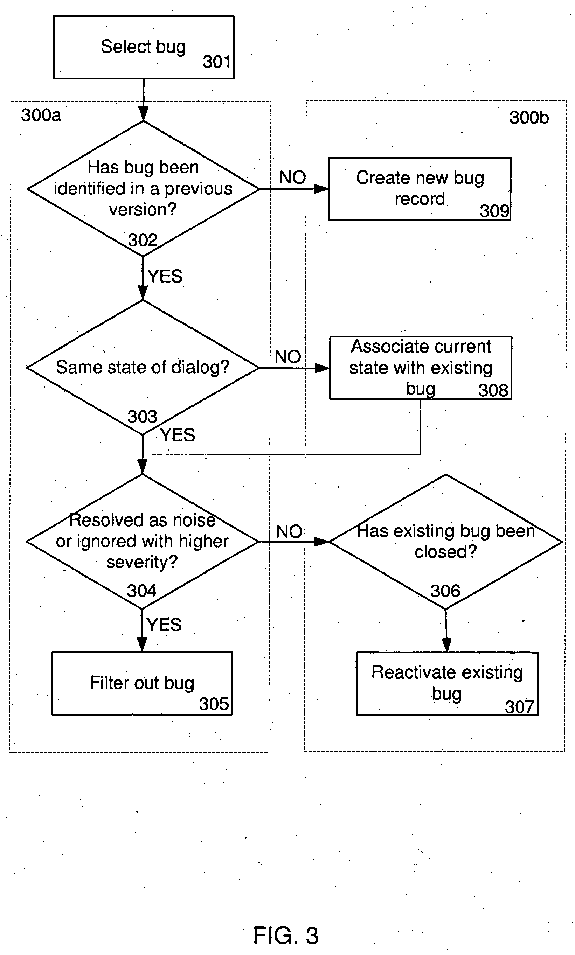

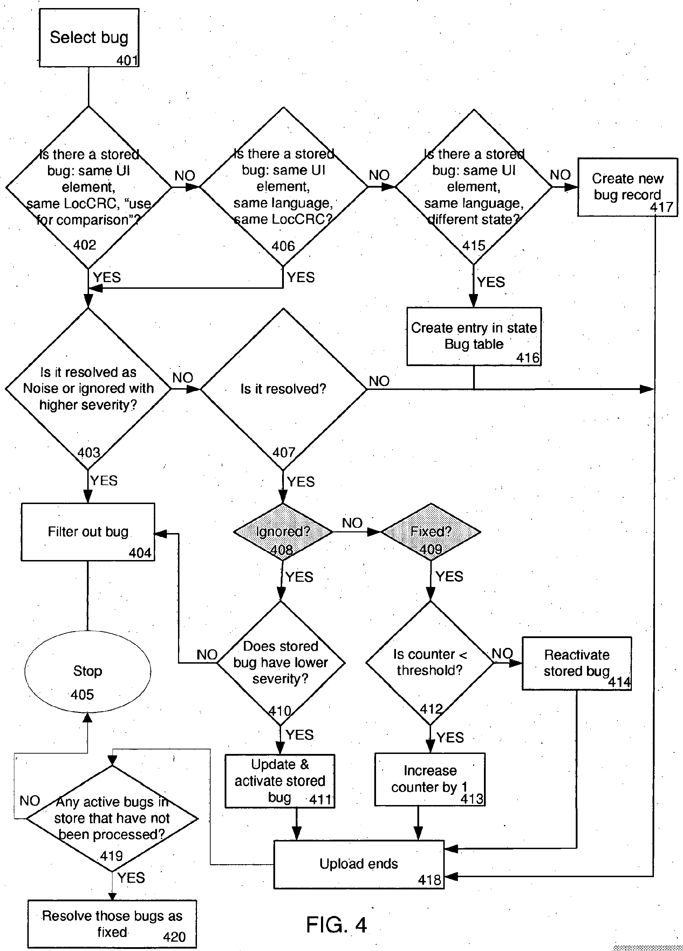

The bug manager 202 filters the bug data received from the capture loader 201 and uploads the filtering results to the bug store 204 (step 102). This filtering process, which can be described with reference to FIG. 3, compares a bug in a particular build / version (selected in step 301 and referred to as the 'selected bug') against bugs which have been previously identified (e.g. in previous builds or other language versions). The comparison may be performed against all previously identified bugs, or against bugs which have been specifically marked as to be used for comparison and / or filtering purposes. [FIG. 3 is intended to be a simplified version, with more detail being shown in FIG. 4] The filtering process may be considered to be divided into two phases 300a, 300b. The first phase 300a involves filtering out bugs which do not need further consideration, whilst the second phase 300b involves the uploading / updating of data stored in the bug store 204. The bugs may be identified by one or more unique references, such as a LocHash (a language insensitive parameter) and a Hash (a language specific parameter). To create the LocHash for a bug, the LocHash values for each of the controls involved in the bug may be combined along with an ID for the type of the bug (e.g. duplicate hotkey = 1, text truncation = 2 etc). The Hash for a bug may be created similarly, from a combination of the Hash values for each of the controls involved in the bug and the ID for the type of bug.

In an example, a selected bug (identified by its LocHash and Hash values) may indicate that in dialog 1, the controls 1 and 2 overlap. If the same bug, e.g. the same type of problem occurring in the same UI element and associated with the same control(s), (in this example controls 1 and 2 overlapping in dialog 1) has been identified in a previous version (determined in step 302 and referred to as an 'existing bug'), it is determined whether the existing bug relates to the same state of the UI element (step 303) as the selected bug. If the existing bug does relate to the same state as the selected bug and was resolved as noise (e.g. because controls 1 and 2 were supposed to be overlapping in dialog 1) or ignored with higher severity than the selected bug (determined in step 304), this selected bug is filtered out (step 305).

The state of a UI element (such as a dialog) is the specific run-time instance of a UI element with certain controls or other resources enabled / visible. This is used where the software product involves dynamic UI such that the exact appearance of a UI element depends upon the exact sequence of steps prior the display of the UI element. The state ID of a UI element represents this sequence of steps. Where a UI element (such as a dialog) includes a number of different tabs (e.g. the 'Options' dialog in Microsoft Word has tabs such as 'Security', 'Spelling and Grammar', Track Changes' etc) the UI element will have a number of different states, including states relating to the selection of each of the different tabs.

If however, no existing bug is identified which relates to the same UI element and same controls (in step 302), a new bug is created in the bug store (step 309). If instead, the existing bug, although relating to the same UI element and same controls, related to a different state (determined in step 303), the state of the selected bug is associated with the existing bug (step 308). It is then determined whether this existing bug was resolved as noise or ignored with higher severity than the selected bug (step 304) and if so, this selected bug is filtered out (step 305).

If an existing bug is identified which does relate to the same state and but was not resolved as noise or ignored with higher severity than the selected bug (determined in step 304), it is determined whether the existing bug was closed (in step 306) and if so, the existing bug is reactivated (step 307). At the end of the filtering process, any bugs that were identified in a previous version of a language but which have not been identified in the latest version of that same language are resolved as fixed and then closed.

This filtering process has the advantage that once an initial version of a software product has been reviewed, many of the bugs can be filtered out leaving fewer bugs which need to be uploaded to the bug store and subsequently reviewed. As the process is repeated on multiple successive builds of a product, the system continues to learn which bugs can be filtered out and which need to be fixed.

A further advantage of the filtering process is that no manual effort is required to determine whether bugs identified in a first version have been fixed. As described above, at the end of the filtering process, bugs which were marked as active in the bug store for the previous version but which were not identified in the later version are automatically resolved as fixed and closed.

The method shown in FIG. 3 uses the severity of a bug to compare the existing and the selected bugs (in step 304). This parameter enables bugs to be ranked, for example, two boxes may overlap by a very small amount and this may be given a severity related to the amount of overlap (e.g. a low severity rating). Consequently, if the overlap changes in subsequent builds, the severity ratings can be compared and bugs with the same or less overlap may be filtered out. The severity of a bug may be used in other ways, for example, it may relate to the degree of truncation of text (e.g. a truncation of 1 pixel may be given a low severity and ignored) or the type of bug. In other examples, other parameters may be used to compare bugs, such as the area of overlap, the degree of truncation etc.

If, for example, the initial build of a dialog (or other UI element) is in English, this English first build is reviewed and all bugs are resolved and closed. At this point the English dialog can be flagged as saved as a baseline. When the first French build of the same product is developed, the same dialog can be launched, the same dialog information captured and a bug list generated. This bug list is then filtered using data collected in reviewing the first English build, such that bugs marked as noise in the English first build which also occur in the French first build are filtered out and not presented to a reviewer. If, for example, a bug is identified, however in the French first build in which two controls overlap by two pixels, this will be presented to the reviewer who may indicate that this overlap is acceptable by resolving the bug as ignored and then closing it. The remaining active bugs (e.g. a truncation of a caption on a control) are then assigned to engineers for fixing and when this is done, the result may be a second French build. Now the same process happens again and in the filtering process, the overlap of the controls which overlapped in the first French build is checked. As long as the overlap does not exceed two pixels the bug is filtered out. The bugs in the first build are checked and if they are no longer present (e.g. the truncation has been fixed) the bug is closed. This results in no bugs being reported because they have all been closed and this second French build of the dialog is now ready to be saved as a baseline.

Another more detailed example of a filtering method can be described with reference to FIG. 4. The filtering process may use a number of different parameters which may include the LocCRC (or LocHash), the CRC (or Hash) and the severity of a bug (as described above). As described above, the LocCRC is a language insensitive parameter and is consistent across different releases and all language versions, whilst the CRC is a language specific parameter. Examples of how these parameters may be determined are described above. In another example, the LocCRC may be calculated using a hash of one or more other parameters associated with the bug, such as the type of bug, the dialog or state ID, parameters relating to the controls in the dialog (e.g. their IDs and types) or any other information which remains the same across all language variants. The CRC may be calculated using a hash of one or more parameters associated with the bug (these may be the same as or different from those used to calculate the LocCRC) and in addition one or more captions (language specific strings) associated with the bug.

A bug is selected from the bug data received (step 401) and it is determined whether a bug already exists for the same UI element and the same LocCRC which is marked as "Use for Comparison" e.g. by setting a bit in a flag (step 402). This existing bug need not be in the same language as the build being processed. If such a bug does exist, it is determined whether the existing bug has been resolved as noise or ignored with a higher severity than the selected bug (step 403) and if so, the selected bug is filtered out (step 404) and the filtering process ends for that bug (step 405). If however it is determined that there is not a bug which already exists for the same UI element and the same LocCRC and which is marked as "Use for Comparison" (in step 402), it is determined whether a bug already exists for the same UI element, the same language and the same LocCRC (step 406). Any such existing bug (in step 406) would not have a "Use for Comparison" flag or it would have been identified in step 402. If such a bug does exist, for the same UI element, same language and same LocCRC (identified in step 406), it is again determined whether the existing bug has been resolved as noise or ignored with a higher severity than the selected bug (step 403) and if so, the selected bug is filtered out (step 404) and the filtering process ends for that bug (step 405).

If, however, (in step 403) it is determined that the existing bug has not been resolved either as noise or ignored with a higher severity, it is determined whether the bug has been resolved (in step 407). If the bug has not been resolved, then this means that the bug was identified in a build which is still being updated and the upload ends (step 418). This may, for example, mean that the engineer has not resolved the bug although they made a fix. If the existing bug has been resolved (determined in step 407), it is determined whether it was resolved either as 'ignored' (in step 408) or as 'fixed' (in step 409). If the existing bug was ignored (determined in step 408) it is confirmed whether the existing bug has a lower severity rating than the currently selected bug (step 410). If the severity rating of the existing bug is higher, it should have already been filtered out (in step 404) but if the severity of the selected bug is higher, the record for the existing bug is updated and activated (step 411) and then the upload ends (step 418).

If the existing bug was fixed (determined in step 409), if the regression counter, which records the number of consecutive builds a bug occurs on, is less than the regression threshold for the current language (determined in step 412), then the counter is increased by 1 (step 413) and the upload ends (step 418). If however, the regression counter is equal to or exceeds the regression threshold for the current language (determined in step 412), then the existing bug is reactivated (step 414) and upload ends (step 418). Use of such a regression counter may be beneficial where the bug identification and filtering occurs regularly (e.g. weekly) such that an engineer may have resolved the bug as fixed (in the bug database) but does not make the change in time for it to appear in the next build upon which the bug identification and filtering process is run. If such bugs were reactivated, confusion may arise and therefore a regression counter enables a certain number of builds to pass through the bug identification and filtering process (e.g. 2) before the bug is reactivated.

If it is determined that there is no existing bug which relates to the same UI element, has the same LocCRC and is either marked as "Use for Comparison" (step 402) or in the same language (step 406), then it is determined whether there is an existing bug for the same UI element, the same language but a different state (step 41 5). If such a bug exists, an entry is made (step 416) which links the current state (in which the selected bug occurred) with the existing stored bug (in the bug store 204) and then upload ends (step 418). This entry may be made in a table referred to as the StateBug table. If no such bug exists (determined in step 41 5), a new bug record is created (step 41 7) and then upload ends (step 418).

Having filtered and processed the selected bug as shown in FIG. 4, the process (steps 401-418) may be repeated for other bugs in the bug data received. Following the end of an upload (step 418) or the completion of filtering (step 405) for a particular version, if there are any active bugs in the bug store for the previous version of the same product in the same language which were not processed because they were not identified in the bug data received (identified in step 41 9), these bugs are resolved as fixed, then closed and their regression counter is set to zero (step 420).

The filtering process described above and shown in FIG. 4 operates irrespective of whether a previous version has been saved as a base line or not. The existing stored bugs are those which have been identified from any previous version which has been processed, whilst the 'use as comparison' bugs (referred to in step 402) are those which have been identified in a base line version.

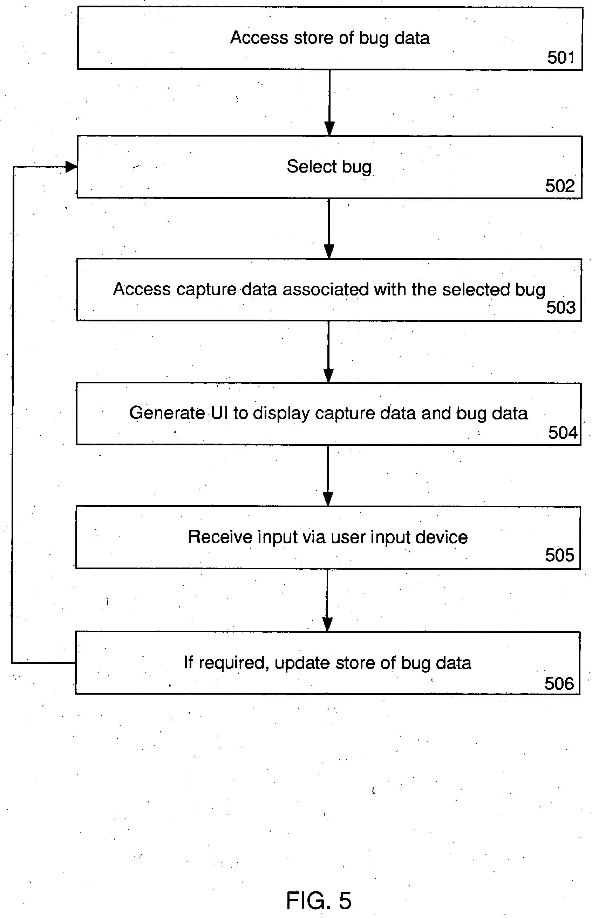

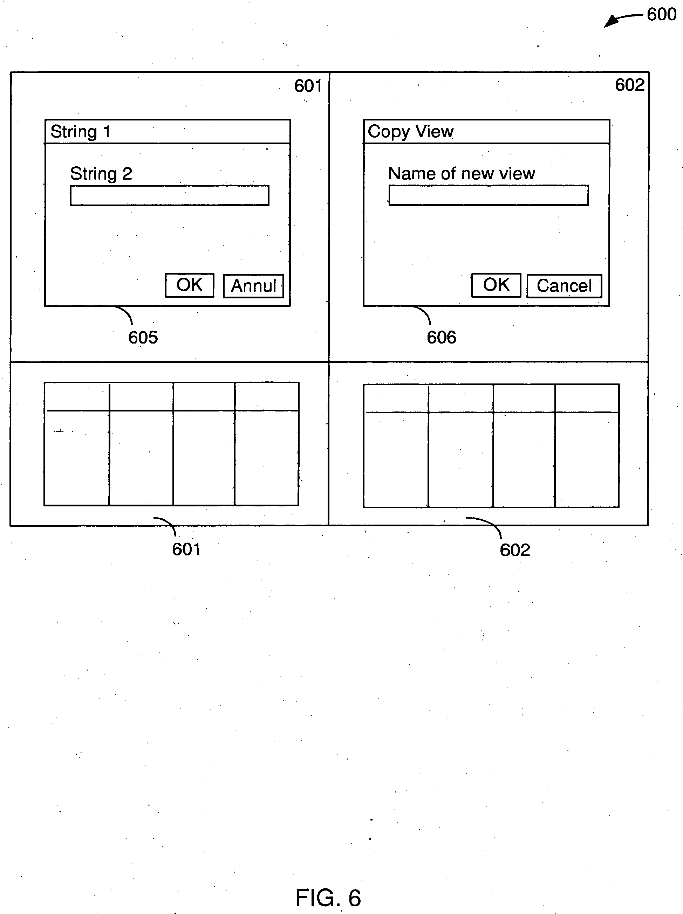

The bug management client 205 accesses data stored in the bug store 204 and the capture data store 203 and generates a UI which can be used by a reviewer in reviewing the UI of a new software product build or language version. The UI may also be used by an engineer who is to fix a bug in order to provide them with data on the bug that requires fixing (as in FIG. 1 step 109). The client may run on a computer comprising a processor, a display and a user input device (e.g. mouse and / or keyboard). The operation of the bug management client 205 can be described with reference to FIG. 5. The client accesses the store of bug data (step 501) and selects a bug (step 502). The client also accesses capture data associated with the selected bug (step 503) from the capture data store. Using the data accessed from both the bug store and the capture data store, the client generates a UI (step 504) which displays data about the selected bug and images of the dialog or other UI element in which the bug occurs, as described below with reference to FIG. 6. The UI may also display other context information associated with the bug. Via a user input device, an input is received (step 505) e.g. from the reviewer and according to the input received, the store of bug data may be updated (step 506). In such situations, an input received may therefore influence future filtering operations performed by the bug manager 202. An input received may in addition (or instead) be used in the selection of the bug to be displayed by the UI and other UI configuration details. An input received may also be used to cause a UI element to be saved as a baseline or to identify an engineer as being responsible for fixing a bug or for any other purpose. An input received may also represent a comment which the reviewer has on the bug. Such information is stored in the bug store and may be subsequently presented to another user who views that bug (e.g. the engineer assigned to fix the bug or another reviewer). The process (steps 502-506) may then be repeated for other bugs within the bug store (e.g. for each active bug).

As described above, the client may be used by several different types of user and the operation of the client may be different dependent on the type of user (e.g. identified by login name, access level etc). For example, where a bug is identified in a first version of a software product, marked as active and assigned to an engineer by a reviewer, if that same bug is found to still be present in a second version of the software product (without the first bug ever having been closed), the bug may not be re-presented to the reviewer but may just be re-presented to the engineer assigned to fix the bug.

FIG. 6 shows an example 600 of the UI generated by the bug management client 205. The screen comprises four panes: the review capture pane 601, the reference capture pane 602, the UI element state pane 603 and the bug pane 604. The review capture pane 601 displays captures 605 for the build / version being reviewed and which are to be compared against the reference capture 606 displayed in the reference capture pane 602. Both panes show the same UI element and the reference capture pane 602 may be configured to display the UI element capture associated with the version / build that has been saved as baseline or the UI element capture associated with any other version / build. Where the capture 605 in the review capture pane 601 includes a bug, these may be highlighted, for example, by a red rectangle surrounding the controls causing bugs. Where the first version / build of a new software product is being displayed, there will be no stored reference captures and so this pane may be blank or may not be displayed. The UI element state pane 603 enables a user to filter by UI element (or by UI element type) and may display records from the bug store using the selected filter options. Data displayed may include the State ID, UI Element Title, Language, Application, Component, File Name, Operating System etc. The bug pane 604 may be used for selecting bug filters and again may display records from the bug store using the selected filter options. Data displayed may include the Bug ID, Severity of the bug, Status of the bug, Resolution of the bug, Bug Type etc.

It will be appreciated that the UI shown in FIG. 6 has been simplified for explanation purposes. The UI may include many additional features and panes including floating panes, menu bars etc. The UI may also display any comments that have been input about any of the bugs which are displayed in a comments window or as part of another pane.

In FIG. 2 the capture data store 203 and the bug store 204 are shown separately. However, it will be appreciated that these two stores may be combined or the storage of capture data and bug data may be distributed over several storage locations. Furthermore, in some circumstances it may be beneficial to have the same bug data stored in more than one location, in which case the bug manager 202 may be arranged to synchronise the data and to ensure that if a bug status is changed (e.g. closed, activated etc) that this change is recorded in both locations. For example, a first bug store may contain only those real bugs which relate to a product whilst a second bug store may contain those bugs considered as noise and used for filtering, as described above.

It will be appreciated that the bug management tool 200 need not be integrated and may be implemented as more than one separate tool. For example a first tool may comprise the capture loader 201 which is connected to the bug database 202, whilst a second tool may comprise the bug management client 203 which is also connected to the bug database 202. Furthermore, any of these tools may be combined with any of the other tools described herein.

The above description referred to bugs as errors. However, when comparing a version back to a baseline, it may be beneficial to flag all changes as bugs. When these bugs are reviewed initially, some of these changes may be marked as noise for all subsequent reviews back to the baseline, for example where the change relates to a change in date or a change in version number.

In the above description, the filtering process learns by way of user input which is received. In another embodiment, the learning may use machine learning techniques such that general rules may be developed to further filter bugs.

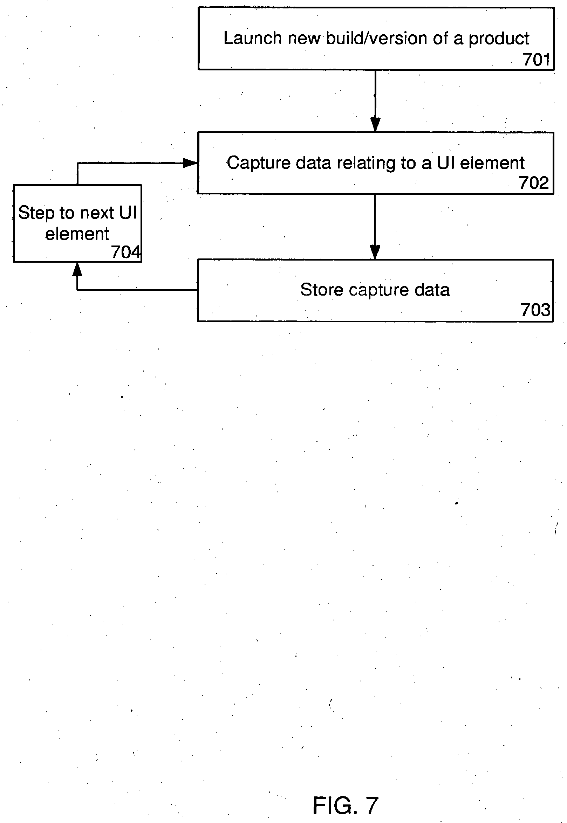

As described above, capture data is used by the bug management client and is presented via a UI to a user, such as a reviewer or an engineer. This additional information makes the process of reviewing bugs more efficient and more accurate. FIG. 7 shows an example method of obtaining this capture data which may be subsequently stored by the capture loader 201 in a capture data store 203. The method comprises launching the new version / build of the software product (step 701) and capturing data relating to a UI element, such as a dialog, a menu, a toolbar, a tooltip, an error message etc (step 702). Information captured may include a bitmap (or other image) of the UI element and the location and content of each of the controls in the UI element. For each control, the type, ID and coordinates may be captured along with the data on the content of the control, such as the content itself (e.g. the text), the coordinates of the content and the font used for the content. This captured information is stored (step 703) and then the software product is stepped to the next UI element (step 704) and the process (steps 701-703) is repeated. The process of stepping to the next UI element may be performed manually or the process may be automated using a set of automated scripts which step through every UI element and every state of each UI element. The script for each state may be referenced by a state ID which can be used to correlate aspects of the captured information (e.g. the captured images and the captured control information). These scripts may be read by a dedicated application which simulates the required keyboard strokes and / mouse clicks to control the software product.

An example of the capturing process for a Win32 format dialog is shown below, in which an on screen window is identified by a transient "window handle" (HWND) within the system:
1. Capture a bitmap picture:
   - Find location of window using GetWindowRect() API.
   - Create a device context and bitmap object compatible with the window - CreateCompatibleDC()/CreateCompatibleBitmap()
   - copy the bits into the bitmap - BitBlt()
2. Enumerate the controls on the dialog and extract useful information:
   EnumChildWindows(HWND)
   Captions: GetWindowText(HWND of child)
   Location: GetWindowRect(HWND of child)
   Control ID: GetWindowLong(HWND of child)

In some examples, the bug management method is able to validate that it is capturing the correct dialog. In order to achieve this, each script/state has a DLL file name and Dialog ID associated with it (e.g. MSAIN.DLL, 5029 - the "Run Macro" dialog within Microsoft Access). At runtime, each dialog window is identified in the system by a window handle (HWND). No API (application program interface) currently exists to retrieve the source file name and resource ID of a dialog based on its HWND and therefore alternative mechanisms to achieve this have been developed and these are described in more detail below.

On boot time of a target application, a utility DLL is hooked into the target process. This can be achieved by numerous mechanisms such as Windows Shim, or using Windows Message Hooking via SetWindowsHookEx. Once inside the process, the DLL hooks a number of key APIs in order to track the creation of dialogs. API hooking is accomplished using Detours (http://research.microsoft.com/sn/detours/). Detours intercepts Win32 functions by re-writing the in-memory code for target functions and also contains utilities to attach arbitrary DLLs and data segments (called payloads) to any Win32 binary. A different mechanism is required depending on if the application is using the direct or indirect method of dialog display, as described below.

Dialog Box templates are typically stored in a DLL as part of a Windows software product. The developer has two primary ways of displaying this UI:
- Direct method: ask the OS to display the dialog given a specific DLL and Dialog ID (DialogBoxParam)
- Indirect method: supply the template itself to the OS (DialogBoxIndirectParam) after loading it into memory.

Within a process, each functional module loaded is identified by a module handle (HMODULE). Typically you can retrieve the source file name for a module using the GetModuleFileName API. However, when dealing with DLLs only containing resource data (as opposed to functional code), the recommended way to load the DLL is to use LoadLibraryEx supplying the LOAD_LIBRARY_AS_DATAFILE flag. This improves performance but as a result GetModuleFileName is no longer able to resolve the source file name as it is loaded in a different way.

In order to overcome this, the utility DLL hooks the LoadLibrary/LoadLibraryEx APIs in order to track requests to load DLLs by the application. The utility DLL maintains a table of module handle to file name based on the information obtained within the hook.

Where the application uses the direct method for dialog display (DialogBoxParam API and derivatives), the API receives the DLL handle and resource ID directly and therefore the following method may be used to associate a window handle to this:
1. Host application calls DialogBoxParam passing the module handle and resource ID
2. Hook stores this information in Thread Local Storage
3. Hook sets up a Windows Hook in order to track the next dialog creation message
4. Hook calls the OS DialogBoxParam API
5. OS Creates the dialog and posts a WM_INITDIALOG message to it
6. Window Hook sees this message along with the HWND, and then associates it with the last resource ID / module handle stored
7. Module Handle is resolved to a file name using the DLL Tracking Table, then stores the resulting HWND to File and Resource ID association in a memory table

Where the application uses the indirect method for dialog display (DialogBoxIndirectParam and derivatives), during indirect creation, an application takes responsibility for loading the dialog resource. This will usually be accomplished using the FindResource/LoadResource/LockResource combination of APIs. Tracking is implemented as follows:
1. Hooks are installed for FindResource and DialogBoxIndirectParam
2. Host application calls FindResource passing the module handle and resource ID of the dialog template
3. Hook intercepts this call, and loads the resource itself using the OS API FindResource, LoadResource, LockResource sequence
4. Contents of the dialog template are hashed using basic CRC32 hashing
5. Hash value along with Module Handle and resource ID are stored into a table
6. Original handle obtained from FindResource is returned to the host application
7. At some point, the application calls LoadResource and LockResource
8. Application calls DialogBoxIndirectParam passing a pointer to the in memory template
9. Hook intercepts call and hashes the template supplied.
10. Hook looks up hash against table of previously loaded templates to resource the Module Handle and Resource ID.
11. Hook stores this information in Thread Local Storage
12. Hook sets up a Windows Hook in order to track the next dialog creation message
13. Hook calls the OS DialogBoxIndirectParam API
14. OS Creates the dialog and posts a WM_INITDIALOG message to it
15. Window Hook sees this message along with the HWND, and then associates it with the last resource ID / module handle stored
16. Module Handle is resolved to a file name using the DLL Tracking Table, then stores the resulting HWND to File and Resource ID association in a memory table

Finally, an API is exposed in the utility DLL that allows the resource ID table to be queried. This API attempts to resolve the file name and resource ID of a window based on its HWND.

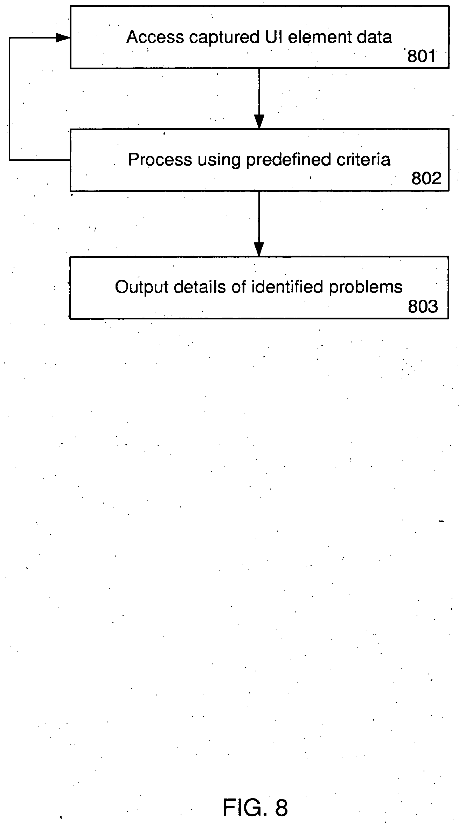

In addition to being used by the bug management client, the captured data may be used to automatically identify bugs, as shown in FIG. 8. The captured UI element data is accessed (step 801) and then data for a UI element is processed using predefined criteria (step 802). For example, the UI element data may be analysed to look for particular errors, such as:
- Text truncation: is the area occupied by the content greater than the area of the control?
- Overlap: does any control overlap any other control?
- Duplicate hotkey: do one or more captions in a UI element have the same hotkey?
- Missing hotkey: do any captions not have a hotkey?
In addition to comparing the captured parameters for each UI element, the processing may in addition (or instead) involve full or partial bitmap comparison, in particular when comparing a version to a baseline and identifying all the changes in a dialog as bugs. These bugs are known as comparison bugs. This may be particularly beneficial for some features, for example all those of type "owner drawn", and the use of bitmap comparisons may be limited according to specified criteria (e.g. certain features, certain feature / UI element types, only when comparing to baseline, certain dialogs etc). An example of where partial bitmap comparison may be beneficial is in checking the sample graphs displayed in the Graph Wizard in Microsoft Excel (trade mark). It is possible, due to a localization bug, for the bar graph picture to be displayed when a user selects, for example, the pie chart option. A partial bitmap comparison would flag this problem. A partial comparison is performed rather than a full bitmap comparison (e.g. a comparison of just the picture in the dialog and not the surrounding text) is that false positives can occur when doing a full bitmap comparison, e.g. the colour of the pixel behind the round corners of Windows XP dialogs is undetermined or a user can select a different colour scheme which would also flag a false positive across a full dialog bitmap comparison. This flagging of changes identified through bitmap comparison enables a reviewer to check the aesthetics of any UI elements which may have changed in shape / size / configuration etc whilst maintaining controls that don't overlap, truncate the text etc and therefore otherwise might not be identified in the data analysis. The processing may be repeated for each UI element within the software product and then details of the identified problems may be output (step 803). The output data may comprise details of the controls to which the bug relates and an indication of the nature of the bug. A bug ID may be used which comprises a hash of the hashes associated with each control to which the bug relates.

In another embodiment, the automatic identification of bugs may use machine learning techniques to develop generalised bug identification rules, in addition to (or instead of) the predefined criteria described above.

The above methods and tools may be used to test any UI for example in development of a software product, in localisation of a software product or in producing a new version of an existing product (e.g. the next release of a product). The methods and tools may be used to manage bug information where the bugs may relate to errors, design choices and / or merely indicate that a change has occurred between the two builds of a software product being compared.

A bug may be considered noise in any situation where it is not considered to be a defect that requires fixing. In some embodiments, bugs may be resolved as noise instead of being resolved as ignored.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Although the present examples are described and illustrated herein as being implemented in a PC based system, the system described is provided as an example and not a limitation. As those skilled in the art will appreciate, the present examples are suitable for application in a variety of different types of computing systems.

Any range or device value given herein may be extended or altered without losing the effect sought, as will be apparent to the skilled person.

The steps of the methods described herein may be carried out in any suitable order, or simultaneously where appropriate. It will be appreciated that the repetition of steps or series of steps shown in the FIGS. is by way of example only and the repetition may occur in a different manner.

It will be understood that the above description of a preferred embodiment is given by way of example only and that various modifications may be made by those skilled in the art.

## Claims

1. An automated bug management method comprising:
receiving data identifying one or more potential bugs in a user interface of a second version of a software product, wherein the user interface of the second version of the software product is in a second language and the data identifying one or more potential bugs comprises a language insensitive reference for each of the one or more potential bugs;
accessing data in a data store, the data relating to previously reviewed bugs in a user interface of at least a first version of the software product, wherein the user interface of the first version of the software product is in a first language;
comparing the potential bugs with the reviewed bugs to determine whether any of the one or more potential bugs are noise, wherein noise comprises falsely identified bugs;
filtering the received data to remove data identifying potential bugs which are noise; and
updating the data in the data store based on the filtered data.

2. An automated bug management method according to claim 1, wherein the at least a first version of the software product comprises a version of the software product saved as a baseline.

3. An automated bug management method according to any of the preceding claims, wherein the language insensitive reference for a potential bug comprises a combination of language insensitive parameters for each control involved in the bug and an identifier for a type associated with the bug.

4. An automated bug management method according to any of the preceding claims, wherein comparing the potential bugs with the reviewed bugs to determine whether any of the one or more potential bugs are noise comprises:
comparing the received language insensitive references for the one or more potential bugs with the language insensitive references for the reviewed bugs to identify any reviewed bugs with identical language insensitive references; and
for each of the identified reviewed bugs with identical language insensitive references, determining if the bug was flagged as noise.

5. An automated bug management method according to claim 4, further comprising:
for each of the identified previously reviewed bugs, determining if the bug was flagged as ignored and identifying a severity level associated with the flag; and
filtering the received data to remove data identifying any potential bugs with identical language insensitive references to a reviewed bug which was flagged as ignored with a higher severity level than the potential bug.

6. An automated bug management method according to any of the preceding claims, further comprising:
selecting a bug from the updated data in the data store; and
displaying data relating to the selected bug.

7. An automated bug management method according to claim 6, wherein the data relating to the selected bug includes:
an image captured from the second version of the software product showing the selected bug.

8. An automated bug management method according to claim 7, further comprising:
displaying a corresponding image captured from the first version of the software product.

9. An automated bug management method according to any of claims 6-8, further comprising:
receiving an input relating to the selected bug; and
changing a flag associated with the bug based on the input.

10. An automated bug management method according to claim 9, wherein the flag is changed to one of noise, ignored or fixed.

11. An automated bug management method according to any of claims 6-10, further comprising:
receiving an input relating to the selected bug; and
closing the bug based on the input.

12. An automated bug management method according to any of the preceding claims, wherein updating the data in the data store based on the filtered data comprises:
for each potential bug identified in the filtered data, determining whether data relating to a corresponding reviewed bug exists in the data store;
where there is no data relating to a corresponding reviewed bug, creating a new entry in the data store; and
where there is data relating to a corresponding reviewed bug, updating said data.

13. An automated bug management method according to claim 12, wherein updating the data in the data store based on the filtered data further comprises:
identifying each of the reviewed bugs in the user interface of at least a first version of the software product where the relating data has not been updated; and
closing each said identified reviewed bug.

14. An automated bug management method according to any of the preceding claims, wherein receiving data identifying one or more potential bugs in a user interface of a second version of a software product comprises:
launching the second version of the software product, wherein the user interface of the second version of the software product comprises a plurality of dialogs;
capturing data relating to each of the plurality of dialogs; and
analysing the captured data according to specified criteria to identify one or more potential bugs.

15. A computer program comprising computer program code means adapted to perform all the steps of any of the preceding claims when said program is run on a computer.

16. A computer program as claimed in claim 1 5 embodied on a computer readable medium.

17. A bug management tool comprising:
a processor;
a memory arranged to store executable instructions arranged to cause the processor to:
receive data identifying one or more potential bugs in a user interface of a second version of a software product, wherein the user interface of the second version of the software product is in a second language and the data identifying one or more potential bugs comprises a language insensitive reference for each of the one or more potential bugs;
access data in a data store, the data relating to previously reviewed bugs in a user interface of at least a first version of the software product, wherein the user interface of the first version of the software product is in a first language;
compare the potential bugs with the reviewed bugs to determine whether any of the one or more potential bugs are noise, wherein noise comprises falsely identified bugs;
filter the received data to remove data identifying potential bugs which are noise; and
update the data in the data store based on the filtered data.

18. A bug management tool according to claim 17, further comprising:
a display;
a user input device;
the data store; and
wherein the memory is further arranged to cause the processor to:
select a bug from the updated data in the data store; and
display data relating to selected bug on the display.

19. A bug management tool according to claim 18, wherein the memory is further arranged to cause the processor to:
update the data in the data store relating to the selected bug based on an input received via the user input device.

20. A bug management tool according to any of claims 17-19, wherein the language insensitive reference for a potential bug comprises a combination of language insensitive parameters for each control involved in the bug and an identifier for a type associated with the bug.

## Patentansprüche

1. Automatisiertes Fehlermanagementverfahren, umfassend:
Empfangen von Daten, die einen oder mehrere potentielle Fehler in einer Nutzerumgebung einer zweiten Version eines Softwareprodukts identifizieren, wobei die Nutzerumgebung der zweiten Version des Softwareprodukts in einer zweiten Sprache ist und die einen oder mehrere potentielle Fehler identifizierenden Daten einen sprachunempfindlichen Bezug für jeden des einen oder der mehreren Fehler umfassen;
Zugreifen auf Daten in einem Datenspeicher, wobei sich die Daten auf früher überprüfte Fehler in einer Nutzerumgebung von zumindest einer ersten Version des Softwareprodukts beziehen, wobei die Nutzerumgebung der ersten Version des Softwareprodukts in einer ersten Sprache ist;
Vergleichen der potentiellen Fehler mit den überprüften Fehlern, um zu bestimmen, ob einer des einen oder der mehreren potentiellen Fehler eine Störung ist, wobei eine Störung falsch identifizierte Fehler umfasst;
Filtern der empfangenen Daten, um potentielle Fehler identifizierende Daten, die eine Störung sind, zu entfernen; und
Aktualisieren der Daten in dem Datenspeicher basierend auf den gefilterten Daten.

2. Automatisiertes Fehlermanagementverfahren nach Anspruch 1, wobei die zumindest eine erste Version des Softwareprodukts eine Version des Softwareprodukts enthält, die als eine Basis gespeichert ist.

3. Automatisiertes Fehlermanagementverfahren nach einem der vorhergehenden Ansprüche, wobei der sprachunempfindliche Bezug für einen potentiellen Fehler eine Kombination aus sprachunempfindlichen Parametern für jede Prüfung umfasst, die in dem Fehler involviert ist, und eine Kennung für ein mit dem Fehler assoziiertes Modell.

4. Automatisiertes Fehlermanagementverfahren nach einem der vorhergehenden Ansprüche, wobei das Vergleichen der potentiellen Fehler mit den überprüften Fehlern, um zu bestimmen, ob einer des einen oder der mehreren potentiellen Fehler eine Störung ist, umfasst:
Vergleichen der empfangenen sprachunempfindlichen Bezüge für den einen oder die mehreren potentiellen Fehler mit den sprachunempfindlichen Bezügen für die überprüften Fehler, um jeden überprüften Fehler mit identischem sprachunempfindlichem Bezug zu identifizieren; und
Bestimmen für jeden der identifizierten überprüften Fehler mit identischem sprachunempfindlichem Bezug, ob der Fehler als eine Störung eine Störung gekennzeichnet wurde.

5. Automatisiertes Fehlermanagementverfahren nach Anspruch 4, ferner umfassend:
Bestimmen für jeden der identifizierten früher überprüften Fehler, ob der Fehler als ignoriert gekennzeichnet wurde, und Identifizieren eines Schweregrades, der mit der Kennzeichnung assoziiert ist; und
Filtern der empfangenen Daten, um Daten zu entfernen, die irgendwelche potentiellen Fehler mit identischem sprachunempfindlichem Bezug zu einem überprüften Fehler identifizieren, der als ignoriert mit einem höheren Schweregrad als der potentielle Fehler gekennzeichnet wurde.

6. Automatisiertes Fehlermanagementverfahren nach einem der vorhergehenden Ansprüche, ferner umfassend:
Auswählen eines Fehlers aus den aktualisierten Daten in dem Datenspeicher; und
Anzeigen von Daten, die sich auf den ausgewählten Fehler beziehen.

7. Automatisiertes Fehlermanagementverfahren nach Anspruch 6, wobei die Daten, die sich auf den ausgewählten Fehler beziehen, beinhalten:
ein von der zweiten Version des Softwareprodukts erfasstes Bild, das den ausgewählten Fehler zeigt.

8. Automatisiertes Fehlermanagementverfahren nach Anspruch 7, ferner umfassend:
Anzeigen eines korrespondierenden Bildes, das von der ersten Version des Softwareprodukts erfasst wurde.

9. Automatisiertes Fehlermanagementverfahren nach einem der Ansprüche 6-8, ferner umfassend:
Empfangen einer Eingabe, die sich auf den ausgewählten Fehler bezieht; und
Ändern einer Kennzeichnung, die sich auf den Fehler bezieht, basierend auf der Eingabe.

10. Automatisiertes Fehlermanagementverfahren nach Anspruch 9, wobei die Kennzeichnung auf eines aus Störung, ignoriert oder gelöst geändert wird.

11. Automatisiertes Fehlermanagementverfahren nach einem der Ansprüche 6-10, ferner umfassend:
Empfangen einer Eingabe, die sich auf den ausgewählten Fehler bezieht; und
Schließen des Fehlers basierend auf der Eingabe.

12. Automatisiertes Fehlermanagementverfahren nach einem der vorhergehenden Ansprüche, wobei das Aktualisieren der Daten in dem Datenspeicher basierend auf den gefilterten Daten umfasst:
Bestimmen für jeden potentiellen in den gefilterten Daten identifizierten Fehler, ob Daten, die sich auf einen korrespondierenden überprüften Fehler beziehen, in dem Datenspeicher vorhanden sind;
wenn keine Daten vorhanden sind, die sich auf einen korrespondierenden überprüften Fehler beziehen, Erzeugen eines neuen Eintrags in dem Datenspeicher; und
wenn Daten vorhanden sind, die sich auf einen korrespondierenden überprüften Fehler beziehen, Aktualisieren dieser Daten.

13. Automatisiertes Fehlermanagementverfahren nach Anspruch 12, wobei das Aktualisieren der Daten in dem Datenspeicher basierend auf den gefilterten Daten ferner umfasst:
Identifizieren jedes der überprüften Fehler in der Nutzerumgebung von zumindest einer ersten Version des Softwareprodukts, bei der die entsprechenden Daten nicht aktualisiert wurden; und
Schließen jedes der identifizierten überprüften Fehler.

14. Automatisiertes Fehlermanagementverfahren nach einem der vorhergehenden Ansprüche, wobei das Empfangen von Daten, die einen oder mehrere potentielle Fehler in einer Nutzerumgebung einer zweiten Version eines Softwareprodukts identifizieren, umfasst:
Starten der zweiten Version des Softwareprodukts, wobei die Nutzerumgebung der zweiten Version des Softwareprodukts eine Vielzahl an Dialogen umfasst;
Erfassen von Daten, die sich auf jeden der Vielzahl an Dialogen beziehen; und
Analysieren der erfassten Daten gemäß spezifizierten Kriterien, um einen oder mehrere potentielle Fehler zu identifizieren.

15. Computerprogramm, umfassend eine Computerprogrammcode-Einrichtung, die dazu eingerichtet ist, alle Schritte aus einem der vorhergehenden Ansprüche durchzuführen, wenn das Programm auf einem Computer ausgeführt wird.

16. Computerprogramm nach Anspruch 15, das auf einem Computer lesbaren Medium enthalten ist.

17. Fehlermanagementwerkzeug, umfassend:
einen Prozessor;
einen Speicher, der dazu eingerichtet ist, ausführbare Befehle zu speichern, die dazu eingerichtet sind, den Prozessor dazu zu bringen, dass er:
Daten empfängt, die einen oder mehrere potentielle Fehler in einer Nutzerumgebung einer zweiten Version eines Softwareprodukts identifizieren, wobei die Nutzerumgebung der zweiten Version des Softwareprodukts in einer zweiten Sprache ist und die einen oder mehrere potentielle Fehler identifizierenden Daten einen sprachunempfindlichen Bezug für jeden des einen oder der mehreren Fehler umfassen;
auf Daten in einem Datenspeicher zugreift, wobei sich die Daten auf früher überprüfte Fehler in einer Nutzerumgebung von zumindest einer ersten Version des Softwareprodukts beziehen, wobei die Nutzerumgebung der ersten Version des Softwareprodukts in einer ersten Sprache ist;
die potentiellen Fehler mit den überprüften Fehlern vergleicht, um zu bestimmen, ob einer des einen oder der mehreren potentiellen Fehler eine Störung ist, wobei eine Störung falsch identifizierte Fehler umfasst;
die empfangenen Daten filtert, um potentielle Fehler identifizierende Daten, die eine Störung sind, zu entfernen; und
die Daten in dem Datenspeicher basierend auf den gefilterten Daten aktualisiert.

18. Fehlermanagementwerkzeug nach Anspruch 17, ferner umfassend:
eine Anzeigeeinrichtung;
eine Nutzereingabeeinrichtung;
den Datenspeicher; und
wobei der Speicher ferner dazu eingerichtet ist, den Prozessor dazu zu bringen, dass er:
einen Fehler aus den aktualisierten Daten in dem Datenspeicher auswählt; und
Daten, die sich auf den ausgewählten Fehler beziehen, auf der Anzeigeeinrichtung anzeigt.

19. Fehlermanagementwerkzeug nach Anspruch 18, wobei der Speicher ferner dazu eingerichtet ist, den Prozessor dazu zu bringen, dass er:
die Daten in dem Datenspeicher, die sich auf den ausgewählten Fehler beziehen, basierend auf einer über die Nutzereingabeeinrichtung empfangenen Eingabe aktualisiert.

20. Fehlermanagementwerkzeug nach einem der Ansprüche 17-19, wobei der sprachunempfindliche Bezug für einen potentiellen Fehler eine Kombination aus sprachunempfindlichen Parametern für jede Prüfung umfasst, die in dem Fehler involviert ist, und eine Kennung für ein mit dem Fehler assoziiertes Modell.

## Revendications

1. Procédé de gestion de bogue automatisé comprenant :
la réception de données identifiant un ou plusieurs bogues potentiels dans une interface utilisateur d'une seconde version d'un produit logiciel, l'interface utilisateur de la seconde version du produit logiciel étant dans une seconde langue et les données identifiant un ou plusieurs bogues potentiels comprenant une référence insensible à la langue pour chacun des un ou plusieurs bogues potentiels ;
l'accès à des données dans un magasin de données, les données étant relatives à des bogues antérieurement passés en revue dans une interface utilisateur d'au moins une première version du produit logiciel, l'interface utilisateur de la première version du produit logiciel étant dans une première langue ;
la comparaison des bogues potentiels avec les bogues passés en revue pour déterminer si l'un quelconque des un ou plusieurs bogues potentiels sont du bruit, le bruit comprenant des bogues faussement identifiés ;
le filtrage des données reçues pour éliminer les données identifiant des bogues potentiels qui sont des bruits ; et
la mise à jour des données dans le magasin de données en se basant sur les données filtrées.

2. Procédé de gestion de bogue automatisé selon la revendication 1, dans lequel la au moins une première version du produit logiciel comprend une version du produit logiciel sauvegardé comme une ligne de base.

3. Procédé de gestion de bogue automatisé selon l'une quelconque des revendications précédentes, dans lequel la référence insensible à la langue pour un bogue potentiel comprend une combinaison de paramètres insensibles à la langue pour chaque commande impliquée dans le bogue et un identifiant pour un type associé au bogue.

4. Procédé de gestion de bogue automatisé selon l'une quelconque des revendications précédentes, dans lequel la comparaison des bogues potentiels avec les bogues passés en revue pour déterminer si l'un quelconque des un ou plusieurs bogues potentiels sont du bruit comprend :
la comparaison des références insensibles à la langue reçues pour les un ou plusieurs bogues potentiels avec les références insensibles à la langue pour les bogues passés en revue pour identifier tous bogues passés en revue avec des références insensibles à la langue identiques ; et
pour chacun des bogues passés en revue identifiés avec des références insensibles à la langue identiques, le fait de déterminer si le bogue a été signalé comme du bruit.

5. Procédé de gestion de bogue automatisé selon la revendication 4, comprenant en outre :
pour chacun des bogues antérieurement passés en revue identifiés, le fait de déterminer si le bogue a été signalé comme ignoré et l'identification d'un niveau de sévérité associé au drapeau de signalement ; et
le filtrage des données reçues pour éliminer les données identifiant tous bogues potentiels avec des références insensibles à la langue identiques à un bogue passé en revue qui a été signalé comme ignoré avec un niveau de sévérité plus élevé que le bogue potentiel.

6. Procédé de gestion de bogue automatisé selon l'une quelconque des revendications précédentes, comprenant en outre :
la sélection d'un bogue à partir des données mises à jour dans le magasin de données ; et
l'affichage de données relatives au bogue sélectionné.

7. Procédé de gestion de bogue automatisé selon la revendication 6, dans lequel les données relatives au bogue sélectionné incluent :
une image capturée à partir de la seconde version du produit logiciel montrant le bogue sélectionné.

8. Procédé de gestion de bogue automatisé selon la revendication 7, comprenant en outre :
l'affichage d'une image correspondante capturée à partir de la première version du produit logiciel.

9. Procédé de gestion de bogue automatisé selon l'une quelconque des revendications 6 à 8, comprenant en outre :
la réception d'une entrée relative au bogue sélectionné ; et
le changement d'un drapeau de signalement associé au bogue en se basant sur l'entrée.

10. Procédé de gestion de bogue automatisé selon la revendication 9, dans lequel le drapeau de signalement est changé pour l'un parmi bruit, ignoré ou fixe.

11. Procédé de gestion de bogue automatisé selon l'une quelconque des revendications 6 à 10, comprenant en outre :
la réception d'une entrée relative au bogue sélectionné ; et
la fermeture du bogue en se basant sur l'entrée.

12. Procédé de gestion de bogue automatisé selon l'une quelconque des revendications précédentes, dans lequel la mise à jour des données dans le magasin de données sur la base des données filtrées comprend :
pour chaque bogue potentiel identifié dans les données filtrées, le fait de déterminer si des données relatives à un bogue passé en revue correspondant existent dans le magasin de données ;
s'il n'existe pas de données relatives à un bogue passé en revue correspondant, la création d'une nouvelle entrée dans le magasin de données ; et
s'il existe des données relatives à un bogue passé en revue correspondant, la mise à jour desdites données.

13. Procédé de gestion de bogue automatisé selon la revendication 12, dans lequel la mise à jour des données dans le magasin de données sur la base des données filtrées comprend en outre :
l'identification de chacun des bogues passés en revue dans l'interface utilisateur d'au moins une première version du produit logiciel où les données relatives n'ont pas été mises à jour ; et
la fermeture de chaque dit bogue passé en revue identifié.

14. Procédé de gestion de bogue automatisé selon l'une quelconque des revendications précédentes, dans lequel la réception de données identifiant un ou plusieurs bogues potentiels dans une interface utilisateur d'une seconde version d'un produit logiciel comprend :
le lancement de la seconde version du produit logiciel, l'interface utilisateur de la seconde version du produit logiciel comprenant une pluralité de dialogues ;
la capture de données relatives à chacun de la pluralité de dialogues ; et
l'analyse des données capturées selon des critères spécifiés pour identifier un ou plusieurs bogues potentiels.

15. Programme d'ordinateur comprenant des moyens de code de programme d'ordinateur adaptés pour réaliser toutes les étapes de l'une quelconque des revendications précédentes, lorsque ledit programme est exécuté sur un ordinateur.

16. Programme d'ordinateur selon la revendication 15 intégré sur un support lisible par ordinateur.

17. Outil de gestion de bogue comprenant :
un processeur ;
une mémoire agencée pour stocker des instructions exécutables agencées pour amener le processeur à :
recevoir des données identifiant un ou plusieurs bogues potentiels dans une interface utilisateur d'une seconde version d'un produit logiciel, l'interface utilisateur de la seconde version du produit logiciel étant dans une seconde langue et les données identifiant un ou plusieurs bogues potentiels comprenant une référence insensible à la langue pour chacun des un ou plusieurs bogues potentiels ;
accéder à des données dans un magasin de données, les données étant relatives à des bogues antérieurement passés en revue dans une interface utilisateur d'au moins une première version du produit logiciel, l'interface utilisateur de la première version du produit logiciel étant dans une première langue ;
comparer les bogues potentiels avec les bogues passés en revue pour déterminer si l'un quelconque des un ou plusieurs bogues potentiels sont du bruit, le bruit comprenant des bogues faussement identifiés ;
filtrer les données reçues pour éliminer les données identifiant des bogues potentiels qui sont des bruits ; et
mettre à jour les données dans le magasin de données en se basant sur les données filtrées.

18. Outil de gestion de bogue selon la revendication 17, comprenant en outre :
un afficheur ;
un dispositif d'entrée utilisateur ;
le magasin de données ; et
dans lequel la mémoire est en outre agencée pour amener le processeur à :
sélectionner un bogue des données mises à jour dans le magasin de données ; et
afficher des données relatives au bogue sélectionné sur l'afficheur.

19. Outil de gestion de bogue selon la revendication 18, dans lequel la mémoire est en outre agencée pour amener le processeur à :
mettre à jour les données dans le magasin de données relatives au bogue sélectionné sur la base d'une entrée reçue via le dispositif d'entrée utilisateur.

20. Outil de gestion de bogue selon l'une quelconque des revendications 17 à 19, dans lequel la référence insensible à la langue pour un bogue potentiel comprend une combinaison de paramètres insensibles à la langue pour chaque commande impliquée dans le bogue et un identifiant pour un type associé au bogue.
